# EUROPEAN PATENT APPLICATION

(11) **EP 3 196 092 A1**
(43) Date of publication of application: **26.07.2017**
(21) Application number: 15842665.0
(22) Date of filing: 26.08.2015
(51) Int. Cl.: B61F 5/24, F16F 9/26, F16F 9/46

(54) **RAILROAD VIBRATION CONTROL DEVICE**

(30) Priority: 19.09.2014 JP 2014191693
(71) Applicant: KYB Corporation, Tokyo 105-6111 (JP)
(72) Inventor: OGAWA, Takayuki, Tokyo 105-6111 (JP)
(74) Representative: Grünecker Patent- und Rechtsanwälte PartG mbB
(86) International application number: PCT/JP2015/074022
(87) International publication number: WO 2016/042996

(57) **Abstract**

The railroad vibration control device (S) includes a first cylinder device (A) and a second cylinder device (D), the first cylinder device (A) includes a first cylinder body (C1), a pump (12) configured to supply hydraulic pressure to the first cylinder body (C1), and a hydraulic pressure circuit (LC) configured to adjust a thrust force generation direction and a thrust force of the first cylinder body, the second cylinder device (D) includes a second cylinder body (C2) and a damper circuit (DC) configured to cause the second cylinder body (C2) to function as a damper, and the hydraulic pressure circuit (LC) and the damper circuit (DC) are the same circuit.

## Description

### TECHNICAL FIELD

The present invention relates to a railroad vibration control device.

### BACKGROUND ART

There is a conventionally known railroad vibration control device that includes an actuator, or a damper with a variable damping force, interposed between a vehicle body and a truck of a railroad vehicle during use so as to, for example, suppress vibration of the vehicle body in the leftward and rightward directions with respect to the traveling direction.

In a railroad vibration control device including an actuator, a sensor detects vibration of a vehicle body, and the vibration of the vehicle body is suppressed as the actuator exerts a thrust force in the direction of suppressing the vibration of the vehicle body. This can improve ride quality on the railroad vehicle (see, for example, JPH 06-239232A).

Similarly, in a railroad vibration control device including a damper with a variable damping force, a sensor detects vibration of a vehicle body. When the damper with the variable damping force can exert the damping force in the direction of suppressing the vibration of the vehicle body, the damper increases the damping force. Conversely, when the damper can exert the damping force only in the direction of fostering the vibration of the vehicle body, the damper minimizes the damping force. The damper thus implements skyhook control as a passive damper (see, for example, JPH 10-315965A).

### SUMMARY OF INVENTION

A railroad vibration control device including an actuator requires a pump for supplying hydraulic pressure to the actuator, and a motor that drives the pump. To control the motor, such a railroad vibration control device also requires an inverter for driving the motor, and a control box including a controller that generates a control command. The actuator needs to control vibration of a heavy vehicle body. Providing one actuator per truck to control vibration of the vehicle body may not produce sufficient forces. Therefore, it is often the case that two actuators are provided per truck. In this case, four actuators and four control boxes are required per vehicle. This harms the ease of mounting on the railroad vehicle, and increases the cost.

On the other hand, a railroad vibration control device including a damper with a variable damping force achieves a low vibration control effect compared with a railroad vibration control device that controls vibration using an actuator, because the damper cannot actively extend and contract.

The object of the present invention is to provide a railroad vibration control device that can effectively control vibration of a railroad vehicle without impairing the ease of mounting on the railroad vehicle.

According to one aspect of the present invention, a railroad vibration control device includes a first cylinder device and a second cylinder device. The first cylinder device includes a first cylinder body, a pump configured to supply hydraulic pressure to the first cylinder body, and a hydraulic pressure circuit configured to adjust a thrust force generation direction and a thrust force of the first cylinder body. The first cylinder body have a cylinder, a piston slidably inserted into the cylinder, and a rod inserted into the cylinder and joined to the piston. The second cylinder device includes a second cylinder body and a damper circuit configured to cause the second cylinder body to function as a damper. The second cylinder body having a cylinder, a piston slidably inserted into the cylinder, and a rod inserted into the cylinder and joined to the piston. The hydraulic pressure circuit and the damper circuit are the same circuit.

### BRIEF DESCRIPTION OF DRAWINGS

FIG. 1 shows a state in which a railroad vibration control device according to an embodiment is interposed between a vehicle body and a truck of a railroad vehicle.
FIG. 2 is a schematic diagram of a first cylinder device of the railroad vibration control device according to the embodiment.
FIG. 3 is a schematic diagram of a second cylinder device of the railroad vibration control device according to the embodiment.

### DESCRIPTION OF EMBODIMENTS

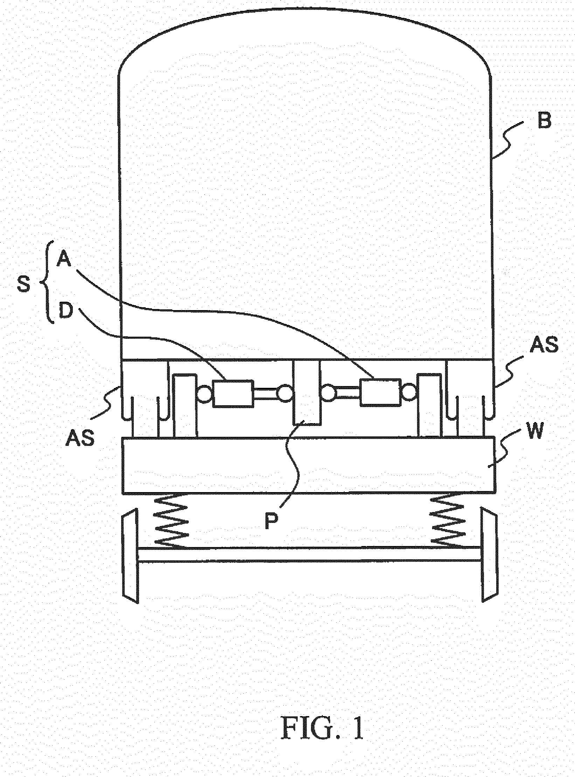

The present invention will be described below on the basis of an embodiment shown in the drawings. As shown in FIG. 1, a railroad vibration control device S according to one embodiment of the present invention basically includes a first cylinder device A and a second cylinder device D. The first cylinder device A is disposed between a central pin P mounted on a vehicle body B of a railroad vehicle and a truck W. The second cylinder device D is disposed between the central pin P and the truck W so as to oppose the first cylinder device A via the central pin P. That is, the first cylinder device A and the second cylinder device D are interposed between the vehicle body B and the truck W while being arranged in parallel. A thrust force output by the first cylinder device A and a damping force output by the second cylinder device D suppress vibration of the vehicle body B in the leftward and rightward directions. The vehicle body B is elastically supported by air springs AS interposed between the vehicle body B and the truck W, and is allowed to move in the upward, downward, leftward, and rightward directions in FIG. 1 relative to the truck W.

First, the first cylinder device A will be described. The first cylinder device A is configured as a single-rod actuator.

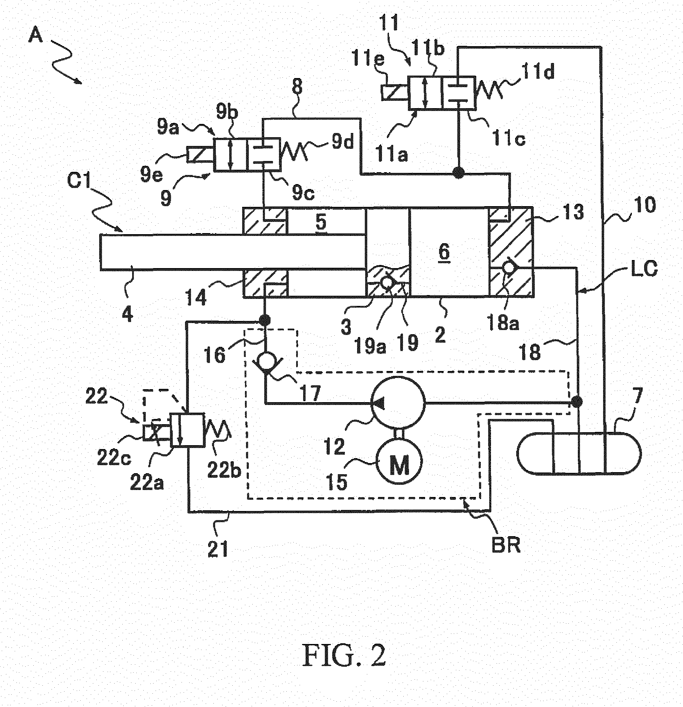

Specifically, as shown in FIG. 2, the first cylinder device A includes a first cylinder body C1, a tank 7, a hydraulic pressure circuit LC that adjusts a thrust force generation direction and a thrust force of the first cylinder body C1, and a pump 12. The first cylinder body C1 includes a cylinder 2, a piston 3 that is slidably inserted into the cylinder 2, a rod 4 that is inserted into the cylinder 2 and joined to the piston 3, and an extension-side chamber 5 and a contraction-side chamber 6 that are separated from each other by the piston 3 inside the cylinder 2. The pump 12 supplies liquid to the extension-side chamber 5.

The extension-side chamber 5 and the contraction-side chamber 6 are filled with the liquid, for example, working oil. The tank 7 is filled with the liquid and gas. Note that the interior of the tank 7 need not particularly be placed in a pressurized state by compressed gas filling.

The hydraulic pressure circuit LC includes a first on-off valve 9, a second on-off valve 11, a suction passage 18, a flow adjustment passage 19, a discharge passage 21, and a variable relief valve 22. The first on-off valve 9 is provided on a first passage 8 that allows the extension-side chamber 5 to communicate with the contraction-side chamber 6. The second on-off valve 11 is provided on a second passage 10 that allows the contraction-side chamber 6 to communicate with the tank 7. The suction passage 18 allows only the flow of the liquid from the tank 7 toward the contraction-side chamber 6. The flow adjustment passage 19 allows only the flow of the liquid from the contraction-side chamber 6 toward the extension-side chamber 5. The discharge passage 21 connects the extension-side chamber 5 and the tank 7. The variable relief valve 22 is provided on the discharge passage 21.

Basically, extension driving of the first cylinder device A is performed by bringing the pump 12 into operation while communication via the first passage 8 is being established by the first on-off valve 9 and the second on-off valve 11 is closed. On the other hand, contraction driving of the first cylinder device A is performed by bringing the pump 12 into operation while communication via the second passage 10 is being established by the second on-off valve 11 and the first on-off valve 9 is closed.

The components of the first cylinder device A will now be described in detail. The cylinder 2 has a tubular shape. One end of the cylinder 2 (the right end in FIG. 2) is closed by a lid 13. An annular rod guide 14 is attached to the other end of the cylinder 2 (the left end in FIG. 2). The rod 4, which is movably inserted into the cylinder 2, is slidably inserted into the rod guide 14. One end of the rod 4 projects to the outside of the cylinder 2. The other end of the rod 4 is housed in the cylinder 2 and joined to the piston 3 that is similarly slidably inserted into the cylinder 2.

A gap between an external circumference of the rod 4 and an internal circumference of the rod guide 14, and a gap between an external circumference of the rod guide 14 and the cylinder 2, are sealed by non-illustrated seal members. Thus, the interior of the cylinder 2 is maintained in an airtight state. As stated earlier, the extension-side chamber 5 and the contraction-side chamber 6, which are separated from each other by the piston 3 inside the cylinder 2, are filled with working oil serving as the liquid.

In the first cylinder device A, a cross-sectional area of the rod 4 is 1/2 of a cross-sectional area of the piston 3, and a pressure receiving area of the piston 3 at the extension-side chamber 5 is 1/2 of a pressure receiving area of the piston 3 at the contraction-side chamber 6. By setting the same pressure in the extension-side chamber 5 during extension driving and contraction driving, the same thrust force is generated during both extension and contraction, and the same flow rate is achieved with respect to a displacement amount of the first cylinder device A during both extension and contraction.

Below is a more detailed description of extension/contraction driving of the first cylinder device A. During extension driving of the first cylinder device A, the extension-side chamber 5 and the contraction-side chamber 6 communicate with each other, and the pressure in the extension-side chamber 5 and the pressure in the contraction-side chamber 6 become equal; thus, the first cylinder device A generates a thrust force equivalent to a product of the equal pressure and the difference between the pressure receiving area of the piston 3 at the extension-side chamber 5 and the pressure receiving area of the piston 3 at the contraction-side chamber 6. In contrast, during contraction driving of the first cylinder device A, the extension-side chamber 5 and the contraction-side chamber 6 do not communicate with each other, and the contraction-side chamber 6 communicates with the tank 7; thus, the first cylinder device A generates a trust force equivalent to a product of the pressure in the extension-side chamber 5 and the pressure receiving area of the piston 3 at the extension-side chamber 5.

Thus, the value of the thrust force generated by the first cylinder device A is equivalent to a product of the pressure in the extension-side chamber 5 and 1/2 of the cross-sectional area of the piston 3 during both extension and contraction. It is hence sufficient to control the thrust force of the first cylinder device A by controlling the pressure in the extension-side chamber 5 during both extension driving and contraction driving.

In the first cylinder device A, the pressure receiving area of the piston 3 at the extension-side chamber 5 is set to be 1/2 of the pressure receiving area of the piston 3 at the contraction-side chamber 6. Therefore, in order for the first cylinder device A to generate the same thrust force during both extension and contraction, it is sufficient to set the same pressure in the extension-side chamber 5 during extension driving and contraction driving. This achieves the advantage whereby control is simplified and the same flow rate is achieved with respect to the displacement amount, thereby attaining the same responsiveness during both extension and contraction.

Note that even when the pressure receiving area of the piston 3 at the extension-side chamber 5 is not set to be 1/2 of the pressure receiving area of the piston 3 at the contraction-side chamber 6, it is still possible to control the thrust force of the first cylinder device A during both extension and contraction with use of the pressure in the extension-side chamber 5.

Non-illustrated attachment portions are mounted on one end of the rod 4 (the left end in FIG. 2) and the lid 13 that closes one end of the cylinder 2 (the right end in FIG. 2). The first cylinder device A is interposed between the vehicle body B and the truck W of the railroad vehicle via the attachment portions.

The extension-side chamber 5 and the contraction-side chamber 6 communicate with each other through the first passage 8. The first on-off valve 9 is provided on the first passage 8. Although the first passage 8 that allows the extension-side chamber 5 to communicate with the contraction-side chamber 6 is located outside the cylinder 2, it may be located in the piston 3.

In the present embodiment, the first on-off valve 9 is a solenoid on-off valve. Specifically, the first on-off valve 9 includes a valve 9a, a spring 9d, and a solenoid 9e. The valve 9a has a communication position 9b to bring the extension-side chamber 5 and the contraction-side chamber 6 into communication with each other by opening the first passage 8, and a block position 9c to block communication between the extension-side chamber 5 and the contraction-side chamber 6. The spring 9d biases the valve 9a so that the valve 9a takes the block position 9c. When current is flowing through the solenoid 9e, the solenoid 9e switches the valve 9a to the communication position 9b in opposition to the spring 9d.

The contraction-side chamber 6 and the tank 7 communicate with each other through second passage 10. The second on-off valve 11 is provided on the second passage 10. In the present embodiment, the second on-off valve 11 is a solenoid on-off valve. Specifically, the second on-off valve 11 includes a valve 11a, a spring 11d, and a solenoid 11e. The valve 11a has a communication position 11b to bring the contraction-side chamber 6 and the tank 7 into communication with each other by opening the second passage 10, and a block position 11c to block communication between the contraction-side chamber 6 and the tank 7. The spring 11d biases the valve 11a so that the valve 11a takes the block position 11c. When current is flowing through the solenoid 11e, the solenoid 11e switches the valve 11a to the communication position 11b in opposition to the spring 11d.

The pump 12 is driven by a motor 15. The pump 12 discharges the liquid only in one direction. A discharge port of the pump 12 communicates with the extension-side chamber 5 via a supply passage 16. A suction port of the pump 12 communicates with the tank 7. When driven by the motor 15, the pump 12 suctions the liquid from the tank 7 and supplies the liquid to the extension-side chamber 5.

As stated earlier, the pump 12 simply discharges the liquid only in one direction, and does not switch its rotation direction. Therefore, the pump 12 does not face the problem of a change in the discharge amount at the time of rotation switching. For this reason, an inexpensive gear pump and the like can be used as the pump 12. Furthermore, as the pump 12 always rotates in the same direction, the motor 15, which serves as a driving source that drives the pump 12, is not required to be highly responsive to rotation switching. For this reason, an inexpensive motor can be used as the motor 15 as well.

A check valve 17 that prevents the reverse flow of the liquid from the extension-side chamber 5 to the pump 12 is provided on the supply passage 16. As the reverse flow of the liquid to the pump 12 is thus prevented, the first cylinder device A can exert a significant force in the direction opposite to the operation direction without getting restricted by the maximum torque of the motor 15.

The extension-side chamber 5 and the tank 7 are connected to each other via the discharge passage 21. The variable relief valve 22 with a variable valve opening pressure is provided on the discharge passage 21.

The variable relief valve 22 includes a valve body 22a provided on the discharge passage 21, a spring 22b that biases the valve body 22a to block the discharge passage 21, and a proportional solenoid 22c that generates a thrust force opposing the spring 22b when current is flowing therethrough. The valve opening pressure is adjusted by adjusting the amount of current flowing through the proportional solenoid 22c.

In the variable relief valve 22, when the pressure in the extension-side chamber 5 that is located upstream relative to the valve body 22a on the discharge passage 21 exceeds a relief pressure (valve opening pressure), a biasing force that is exerted by the spring 22b in the direction of blocking the discharge passage 21 is surpassed by a net force obtained from a thrust force generated by the proportional solenoid 22c and a thrust force exerted in the direction of opening the discharge passage 21 due to the pressure in the extension-side chamber 5. As a result, the variable relief valve 22 causes the valve body 22a to retreat, thereby opening the discharge passage 21.

In the variable relief valve 22, the thrust force that is generated by the proportional solenoid 22c increases as the amount of current supplied to the proportional solenoid 22c increases. Supplying the maximum amount of current to the proportional solenoid 22c minimizes the valve opening pressure. Conversely, supplying no current to the proportional solenoid 22c at all maximizes the valve opening pressure.

When the pressure in the extension-side chamber 5 exceeds the valve opening pressure due to excess input to the first cylinder device A in the extension or contraction direction, the variable relief valve 22 brings the extension-side chamber 5 into communication with the tank 7 by opening the discharge passage 21, whether the first on-off valve 9 and the second on-off valve 11 are in an opened state or a closed state. As a result, the pressure in the extension-side chamber 5 is released to the tank 7, and the entire system of the first cylinder device A is protected.

The first cylinder device A also includes the suction passage 18 that allows the tank 7 to communicate with the contraction-side chamber 6. A check valve 18a is provided on the suction passage 18. The suction passage 18 is set as a unidirectional passage that allows only the flow of the liquid from the tank 7 toward the contraction-side chamber 6.

The first cylinder device A also includes the flow adjustment passage 19 that allows the contraction-side chamber 6 to communicate with the extension-side chamber 5. A check valve 19a is provided on the flow adjustment passage 19. The flow adjustment passage 19 is set as a unidirectional passage that allows only the flow of the liquid from the contraction-side chamber 6 toward the extension-side chamber 5.

Note that the suction passage 18 can be consolidated with the second passage 10 by using a check valve as the block position 11c of the second on-off valve 11. The flow adjustment passage 19 can be consolidated with the first passage 8 by using a check valve as the block position 9c of the first on-off valve 9.

In order for the first cylinder device A to exert a desired thrust force in the extension direction, the first on-off valve 9 is switched to the communication position 9b, and the second on-off valve 11 is switched to the block position 11c. Rotating the motor 15 at a predetermined rotation frequency causes the pump 12 to supply the liquid into the cylinder 2. The extension-side chamber 5 and the contraction-side chamber 6 are brought into communication with each other, and the pump 12 supplies the liquid to both of them. Therefore, the piston 3 is pressed in the extension direction (leftward in FIG. 2), and the first cylinder device A exerts a thrust force in the extension direction.

At this time, when the pressure in the extension-side chamber 5 and the contraction-side chamber 6 exceeds the valve opening pressure of the variable relief valve 22, the variable relief valve 22 is opened, and the liquid is released to the tank 7 via the discharge passage 21. That is, the pressure in the extension-side chamber 5 and the contraction-side chamber 6 is controlled by the valve opening pressure of the variable relief valve 22, which is dependent on the amount of current supplied to the variable relief valve 22. Therefore, in the extension direction, the first cylinder device A exerts a thrust force whose value is equivalent to a product of the pressure in the extension-side chamber 5 and the contraction-side chamber 6, which is controlled by the variable relief valve 22 as stated earlier, and the difference between the pressure receiving area of the piston 3 at the extension-side chamber 5 and the pressure receiving area of the piston 3 at the contraction-side chamber 6.

On the other hand, in order for the first cylinder device A to exert a desired thrust force in the contraction direction, the first on-off valve 9 is switched to the block position 9c, and the second on-off valve 11 is switched to the communication position 11b. Rotating the motor 15 at a predetermined rotation frequency causes the pump 12 to supply the liquid into the extension-side chamber 5. The contraction-side chamber 6 and the tank 7 are brought into communication with each other, and the pump 12 supplies the liquid to the extension-side chamber 5. Therefore, the piston 3 is pressed in the contraction direction (rightward in FIG. 2), and the first cylinder device A exerts a thrust force in the contraction direction.

Similarly to the case in which a thrust force is exerted in the extension direction, the pressure in the extension-side chamber 5 is controlled by adjusting the amount of current supplied to the variable relief valve 22. Therefore, in the contraction direction, the first cylinder device A exerts a thrust force whose value is obtained by subtracting a product of the pressure receiving area of the piston 3 at the contraction-side chamber 6 and the tank pressure from a product of the pressure receiving area of the piston 3 at the extension-side chamber 5 and the pressure in the extension-side chamber 5 controlled by the variable relief valve 22.

As described above, rotating the motor 15 at a predetermined rotation frequency and a constant speed causes no change in the rotation frequency of the pump 12. As a result, the occurrence of noise associated with fluctuations in the rotation frequency of the pump 12 can be prevented, and the first cylinder device A can demonstrate favorable control-related responsiveness. The first cylinder device A may be adjusted by the combination of pressure adjustment by the variable relief valve 22 and a change in the rotation frequency of the motor 15.

The first cylinder device A can function not only as the actuator, but also as a damper, regardless of the condition of driving performed by the motor 15. As the first cylinder device A includes the suction passage 18 and the flow adjustment passage 19, when the first cylinder device A extends or contracts while the first on-off valve 9 and the second on-off valve 11 are in a closed state, the liquid is always discharged from inside the cylinder 2 to the tank 7 via the discharge passage 21.

Specifically, when the first cylinder device A extends while the first on-off valve 9 and the second on-off valve 11 are in a closed state, the extension-side chamber 5 is compressed, and the liquid is discharged to the tank 7 via the discharge passage 21. At this time, the liquid is supplied from the tank 7 to the expanding contraction-side chamber 6 via the suction passage 18.

Conversely, when the first cylinder device A contracts while the first on-off valve 9 and the second on-off valve 11 are in a closed state, the contraction-side chamber 6 is compressed, and the liquid moves to the extension-side chamber 5 via the flow adjustment passage 19. At this time, excess liquid resulting from the insertion of the rod 4 into the cylinder 2 is discharged from inside the cylinder 2 to the tank 7 via the discharge passage 21.

As described above, when the first cylinder device A extends or contracts, the liquid is always discharged from inside the cylinder 2 to the tank 7 via the discharge passage 21. By controlling the pressure in the extension-side chamber 5 with resistance imparted to such a liquid flow with use of the variable relief valve 22, a desired damping force is exerted by the first cylinder device A. Furthermore, in the first cylinder device A, as the pressure receiving area of the piston 3 at the extension-side chamber 5 is set to be 1/2 of the pressure receiving area of the piston 3 at the contraction-side chamber 6, the first cylinder device A exerts the same damping force during both extension and contraction unless the valve opening pressure of the variable relief valve 22 changes.

When the first cylinder device A contracts while communication between the extension-side chamber 5 and the contraction-side chamber 6 is being established by opening the first on-off valve 9 and closing the second on-off valve 11, the extension-side chamber 5 and the contraction-side chamber 6 are compressed due to the insertion of the rod 4 into the cylinder 2. As a result, liquid corresponding to the volume by which the rod 4 is inserted into the cylinder 2 is discharged to the tank 7 via the discharge passage 21. As the variable relief valve 22 imparts resistance to such a liquid flow, the first cylinder device A exerts a damping force in the contraction direction.

Conversely, when the first cylinder device A extends while communication between the extension-side chamber 5 and the contraction-side chamber 6 is being established by opening the first on-off valve 9 and closing the second on-off valve 11, the liquid moves from the extension-side chamber 5 to the contraction-side chamber 6 without being subjected to resistance. At this time, insufficiency of liquid caused by withdrawal of the rod 4 from inside the cylinder 2 is compensated for by supplying the liquid from the tank 7 via the suction passage 18. Therefore, during such extension of the first cylinder device A, the liquid does not flow through the variable relief valve 22, and thus the first cylinder device A does not exert a damping force in the extension direction.

While the first on-off valve 9 is in a closed state and the second on-off valve 11 is in an opened state, the extension-side chamber 5 and the contraction-side chamber 6 do not communicate with each other, whereas the contraction-side chamber 6 and the tank 7 communicate with each other. When the first cylinder device A extends in this state, the extension-side chamber 5 is compressed and discharges the liquid to the tank 7 via the discharge passage 21. The liquid is supplied from the tank 7 to the expanding contraction-side chamber 6 without being subjected to resistance. As the variable relief valve 22 imparts resistance to such a liquid flow, the first cylinder device A exerts a damping force in the extension direction.

Conversely, when the first cylinder device A contracts while the first on-off valve 9 is in a closed state and the second on-off valve 11 is in an opened state, the liquid moves from the compressed contraction-side chamber 6 to the expanding extension-side chamber 5 via the flow adjustment passage 19 without being subjected to resistance. As the contraction-side chamber 6 and the tank 7 communicate with each other, excess liquid resulting from the insertion of the rod 4 into the cylinder 2 is discharged from inside the cylinder 2 to the tank 7 without being subjected to resistance. Therefore, during such contraction of the first cylinder device A, the liquid does not flow through the variable relief valve 22, and thus the first cylinder device A does not exert a damping force in the contraction direction.

As described above, with the first on-off valve 9 and the second on-off valve 11 that switch between an opened state and a closed state, the first cylinder device A can be set as one of a one-way damper that exerts a damping force only during extension, a one-way damper that exerts a damping force only during contraction, and a damper that exerts a damping force during both extension and contraction. Thus, the hydraulic pressure circuit LC enables the first cylinder device A to function not only as the actuator, but also as the damper.

Next, the second cylinder device D will be described. The second cylinder device D is configured as a single-rod damper.

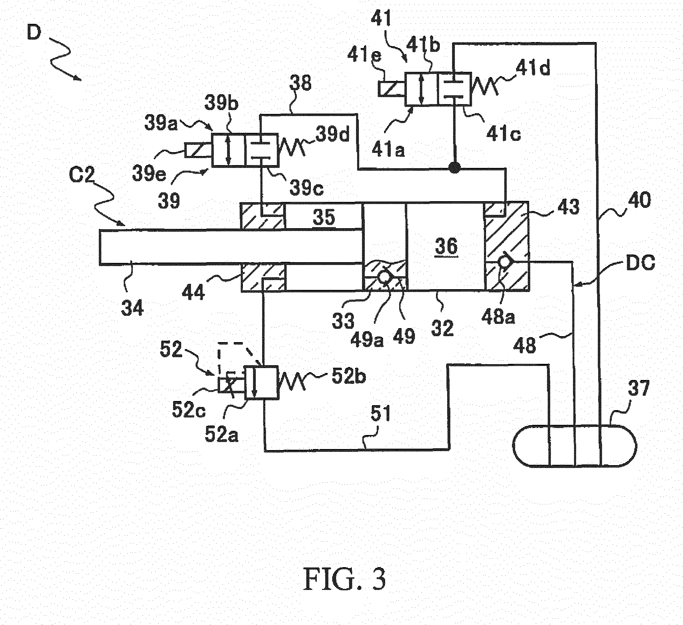

Specifically, as shown in FIG. 3, the second cylinder device D includes a second cylinder body C2, a tank 37, and a damper circuit DC that adjusts a thrust force generation direction and a thrust force of the second cylinder body C2. The second cylinder body C2 includes a cylinder 32, a piston 33 that is slidably inserted into the cylinder 32, a rod 34 that is inserted into the cylinder 32 and joined to the piston 33, and an extension-side chamber 35 and a contraction-side chamber 36 that are separated from each other by the piston 33 inside the cylinder 32.

The extension-side chamber 35 and the contraction-side chamber 36 are filled with liquid, such as working oil. The tank 37 is filled with the liquid and gas. Note that the interior of the tank 37 need not particularly be placed in a pressurized state by compressed gas filling.

The damper circuit DC includes a first on-off valve 39, a second on-off valve 41, a suction passage 48, a flow adjustment passage 49, a discharge passage 51, and a variable relief valve 52. The first on-off valve 39 is provided on a first passage 38 that allows the extension-side chamber 35 to communicate with the contraction-side chamber 36. The second on-off valve 41 is provided on a second passage 40 that allows the contraction-side chamber 36 to communicate with the tank 37. The suction passage 48 allows only the flow of the liquid from the tank 37 toward the contraction-side chamber 36. The flow adjustment passage 49 allows only the flow of the liquid from the contraction-side chamber 36 toward the extension-side chamber 35. The discharge passage 51 connects the extension-side chamber 35 and the tank 37. The variable relief valve 52 is provided on the discharge passage 51.

The components of the second cylinder device D will now be described in detail. The cylinder 32 has a tubular shape. One end of the cylinder 32 (the right end in FIG. 3) is closed by a lid 43. An annular rod guide 44 is attached to the other end of the cylinder 32 (the left end in FIG. 3). The rod 34, which is movably inserted into the cylinder 32, is slidably inserted into the rod guide 44. One end of the rod 34 projects to the outside of the cylinder 32. The other end of the rod 34 is housed in the cylinder 32 and joined to the piston 33 that is similarly slidably inserted into the cylinder 32.

A gap between an external circumference of the rod 34 and an internal circumference of the rod guide 44, and a gap between an external circumference of the rod guide 44 and the cylinder 32, are sealed by non-illustrated seal members. Thus, the interior of the cylinder 32 is maintained in an airtight state. As stated earlier, the extension-side chamber 35 and the contraction-side chamber 36, which are separated from each other by the piston 33 inside the cylinder 32, are filled with working oil serving as the liquid.

In the second cylinder device D, a cross-sectional area of the rod 34 is 1/2 of a cross-sectional area of the piston 33, and a pressure receiving area of the piston 33 at the extension-side chamber 35 is 1/2 of a pressure receiving area of the piston 33 at the contraction-side chamber 36. By setting the same pressure in the extension-side chamber 35 during extension driving and contraction driving, the same thrust force is generated during both extension and contraction, and the same flow rate is achieved with respect to a displacement amount of the second cylinder device D during both extension and contraction.

Below is a more detailed description of extension/contraction driving of the second cylinder device D. During extension driving of the second cylinder device D, the extension-side chamber 35 and the contraction-side chamber 36 communicate with each other, and the pressure in the extension-side chamber 35 and the pressure in the contraction-side chamber 36 become equal; thus, the second cylinder device D generates a thrust force equivalent to a product of the equal pressure and the difference between the pressure receiving area of the piston 33 at the extension-side chamber 35 and the pressure receiving area of the piston 33 at the contraction-side chamber 36. In contrast, during contraction driving of the second cylinder device D, the extension-side chamber 35 and the contraction-side chamber 36 do not communicate with each other, and the contraction-side chamber 36 communicates with the tank 37; thus, the second cylinder device D generates a thrust force equivalent to a product of the pressure in the extension-side chamber 35 and the pressure receiving area of the piston 33 at the extension-side chamber 35.

Thus, the value of the thrust force that is generated by the second cylinder device D is equivalent to a product of the pressure in the extension-side chamber 35 and 1/2 of the cross-sectional area of the piston 33 during both extension and contraction. It is hence sufficient to control the thrust force of the second cylinder device D by controlling the pressure in the extension-side chamber 35 during both extension driving and contraction driving.

In the second cylinder device D, the pressure receiving area of the piston 33 at the extension-side chamber 35 is set to be 1/2 of the pressure receiving area of the piston 33 at the contraction-side chamber 36. Therefore, in order for the second cylinder device D to generate the same thrust force during both extension and contraction, it is sufficient to set the same pressure in the extension-side chamber 35 during extension driving and contraction driving. This achieves the advantage whereby control is simplified and the same flow rate is achieved with respect to the displacement amount, thereby attaining the same responsiveness during both extension and contraction.

Note that even when the pressure receiving area of the piston 33 at the extension-side chamber 35 is not set to be 1/2 of the pressure receiving area of the piston 33 at the contraction-side chamber 36, it is still possible to control the thrust force of the second cylinder device D during both extension and contraction with use of the pressure in the extension-side chamber 35.

Non-illustrated attachment portions are mounted on one end of the rod 34 (the left end in FIG. 3) and the lid 43 that closes one end of the cylinder 32 (the right end in FIG. 3). The second cylinder device D is interposed between the vehicle body B and the truck W of the railroad vehicle via the attachment portions.

The extension-side chamber 35 and the contraction-side chamber 36 communicate with each other through first passage 38, the first on-off valve 39 is provided on the first passage 38. Although the first passage 38 allows the extension-side chamber 35 to communicate with the contraction-side chamber 36 outside the cylinder 32, it may be located in the piston 33.

In the present embodiment, the first on-off valve 39 is a solenoid on-off valve. Specifically, the first on-off valve 39 includes a valve 39a, a spring 39d, and a solenoid 39e. The valve 39a has a communication position 39b to bring the extension-side chamber 35 and the contraction-side chamber 36 into communication with each other by opening the first passage 38, and a block position 39c to block communication between the extension-side chamber 35 and the contraction-side chamber 36. The spring 39d biases the valve 39a so that the valve 39a takes the block position 39c. When current is flowing through the solenoid 39e, the solenoid 39e switches the valve 39a to the communication position 39b in opposition to the spring 39d.

The contraction-side chamber 36 and the tank 37 communicate with each other through the second passage 40. The second on-off valve 41 is provided on the second passage 40. In the present embodiment, the second on-off valve 41 is a solenoid on-off valve. Specifically, the second on-off valve 41 includes a valve 41a, a spring 41d, and a solenoid 41e. The valve 41a has a communication position 41b to bring the contraction-side chamber 36 and the tank 37 into communication with each other by opening the second passage 40, and a block position 41c to block communication between the contraction-side chamber 36 and the tank 37. The spring 41d biases the valve 41a so that the valve 41a takes the block position 41c. When current is flowing through the solenoid 41e, the solenoid 41e switches the valve 41a to the communication position 41b in opposition to the spring 41d.

The extension-side chamber 35 and the tank 37 are connected to each other via the discharge passage 51. The variable relief valve 52 with a variable valve opening pressure is provided on the discharge passage 51.

The variable relief valve 52 includes a valve body 52a provided on the discharge passage 51, a spring 52b that biases the valve body 52a to block the discharge passage 51, and a proportional solenoid 52c that generates a thrust force opposing the spring 52b when current is flowing therethrough. The valve opening pressure is adjusted by adjusting the amount of current flowing through the proportional solenoid 52c.

In the variable relief valve 52, when the pressure in the extension-side chamber 35 that is located upstream relative to the valve body 52a on the discharge passage 51 exceeds a relief pressure (valve opening pressure), a biasing force that is exerted by the spring 52b in the direction of blocking the discharge passage 51 is surpassed by a net force obtained from a thrust force generated by the proportional solenoid 52c and a thrust force exerted in the direction of opening the discharge passage 51 due to the pressure in the extension-side chamber 35. As a result, the variable relief valve 52 causes the valve body 52a to retreat, thereby opening the discharge passage 51.

In the variable relief valve 52, the thrust force that is generated by the proportional solenoid 52c increases as the amount of current supplied to the proportional solenoid 52c increases. Supplying the maximum amount of current to the proportional solenoid 52c minimizes the valve opening pressure. Conversely, supplying no current to the proportional solenoid 52c at all maximizes the valve opening pressure.

When the pressure in the extension-side chamber 35 exceeds the valve opening pressure due to excess input to the second cylinder device D in the extension or contraction direction, the variable relief valve 52 brings the extension-side chamber 35 into communication with the tank 37 by opening the discharge passage 51, whether the first on-off valve 39 and the second on-off valve 41 are in an opened state or a closed state. As a result, the pressure in the extension-side chamber 35 is released to the tank 37, and the entire system of the second cylinder device D is protected.

The second cylinder device D also includes the suction passage 48 that allows the tank 37 to communicate with the contraction-side chamber 36. A check valve 48a is provided on the suction passage 48. The suction passage 48 is set as a unidirectional passage that allows only the flow of the liquid from the tank 37 toward the contraction-side chamber 36.

The second cylinder device D also includes the flow adjustment passage 49 that allows the contraction-side chamber 36 to communicate with the extension-side chamber 35. A check valve 49a is provided on the flow adjustment passage 49. The flow adjustment passage 49 is set as a unidirectional passage that allows only the flow of the liquid from the contraction-side chamber 36 toward the extension-side chamber 35.

Note that the suction passage 48 can be consolidated with the second passage 40 by using a check valve as the block position 41c of the second on-off valve 41. The flow adjustment passage 49 can be consolidated with the first passage 38 by using a check valve as the block position 39c of the first on-off valve 39.

When the second cylinder device D extends while the first on-off valve 39 and the second on-off valve 41 are in a closed state, the extension-side chamber 35 is compressed, the liquid is discharged to the tank 37 via the discharge passage 51, and the liquid is supplied from the tank 37 to the expanding contraction-side chamber 36 via the suction passage 48. Conversely, when the second cylinder device D contracts while the first on-off valve 39 and the second on-off valve 41 are in a closed state, the contraction-side chamber 36 is compressed, the liquid moves to the extension-side chamber 35 via the flow adjustment passage 49, and excess liquid resulting from the insertion of the rod 34 into the cylinder 32 is discharged from inside the cylinder 32 to the tank 37 via the discharge passage 51.

As described above, when the second cylinder device D extends or contracts, the liquid is always discharged from inside the cylinder 32 to the tank 37 via the discharge passage 51. By controlling the pressure in the extension-side chamber 35 with resistance imparted to such a liquid flow with use of the variable relief valve 52, a desired damping force is exerted by the second cylinder device D. Furthermore, in the second cylinder device D, as the pressure receiving area of the piston 33 at the extension-side chamber 35 is set to be 1/2 of the pressure receiving area of the piston 33 at the contraction-side chamber 36, the second cylinder device D exerts the same damping force during both extension and contraction unless the valve opening pressure of the variable relief valve 52 changes.

When the second cylinder device D contracts while communication between the extension-side chamber 35 and the contraction-side chamber 36 is being established by opening the first on-off valve 39 and closing the second on-off valve 41, the extension-side chamber 35 and the contraction-side chamber 36 are compressed due to the insertion of the rod 34 into the cylinder 32. As a result, liquid corresponding to the volume by which the rod 34 is inserted into the cylinder 32 is discharged to the tank 37 via the discharge passage 51. As the variable relief valve 52 imparts resistance to such a liquid flow, the second cylinder device D exerts a damping force in the contraction direction.

Conversely, when the second cylinder device D extends while communication between the extension-side chamber 35 and the contraction-side chamber 36 is being established by opening the first on-off valve 39 and closing the second on-off valve 41, the liquid moves from the extension-side chamber 35 to the contraction-side chamber 36 without being subjected to resistance. At this time, insufficiency of liquid caused by withdrawal of the rod 34 from inside the cylinder 32 is compensated for by supplying the liquid from the tank 37 via the suction passage 48. Therefore, during such extension of the second cylinder device D, the liquid does not flow through the variable relief valve 52, and thus the second cylinder device D does not exert a damping force in the extension direction.

While the first on-off valve 39 is in a closed state and the second on-off valve 41 is in an opened state, the extension-side chamber 35 and the contraction-side chamber 36 do not communicate with each other, whereas the contraction-side chamber 36 and the tank 37 communicate with each other. When the second cylinder device D extends in this state, the extension-side chamber 35 is compressed and discharges the liquid to the tank 37 via the discharge passage 51. The liquid is supplied from the tank 37 to the expanding contraction-side chamber 36 without being subjected to resistance. As the variable relief valve 52 imparts resistance to such a liquid flow, the second cylinder device D exerts a damping force in the extension direction.

Conversely, when the second cylinder device D contracts while the first on-off valve 39 is in a closed state and the second on-off valve 41 is in an opened state, the liquid moves from the compressed contraction-side chamber 36 to the expanding extension-side chamber 35 via the flow adjustment passage 49 without being subjected to resistance. As the contraction-side chamber 36 and the tank 37 communicate with each other, excess liquid resulting from the insertion of the rod 34 into the cylinder 32 is discharged from inside the cylinder 32 to the tank 37 without being subjected to resistance. Therefore, during such contraction of the second cylinder device D, the liquid does not flow through the variable relief valve 52, and thus the second cylinder device D does not exert a damping force in the contraction direction.

As described above, with the first on-off valve 39 and the second on-off valve 41 that switch between an opened state and a closed state, the second cylinder device D can be set as one of a one-way damper that exerts a damping force only during extension, a one-way damper that exerts a damping force only during contraction, and a damper that exerts a damping force during both extension and contraction.

As can be understood from the foregoing description, the damper circuit DC of the second cylinder device D and the hydraulic pressure circuit LC of the first cylinder device A have the same components, and are constructed in the same manner. That is, they are identical. Furthermore, the first cylinder body C1 and the second cylinder body C2 are constructed in the same manner. Therefore, the first cylinder device A and the second cylinder device D differ from each other in that, whereas the first cylinder device A includes the supply passage 16, the pump 12, the motor 15, and the check valve 17 in addition to the first cylinder body C1 and the hydraulic pressure circuit LC, the second cylinder device D includes only the second cylinder body C2 and the damper circuit DC that are constructed in the same manner as the first cylinder body C1 and the hydraulic pressure circuit LC, respectively. In other words, in addition to being configured in the same manner as the second cylinder device D, the first cylinder device A includes the supply passage 16, the pump 12, the motor 15, and the check valve 17.

In the railroad vibration control device S according to the present embodiment, the cylinder 2 of the first cylinder device A and the cylinder 32 of the second cylinder device D have the same inner diameter, the piston 3 of the first cylinder device A and the piston 33 of the second cylinder device D have the same outer diameter, and the rod 4 of the first cylinder device A and the rod 34 of the second cylinder device D have the same outer diameter. Therefore, in a circumstance in which the second cylinder device D can exert a damping force, setting the same valve opening pressure for the variable relief valve 22 of the first cylinder device A and the variable relief valve 52 of the second cylinder device D equalizes a thrust force of the first cylinder device A and the damping force of the second cylinder device D.

In the railroad vibration control device S thus configured, only the first cylinder device A includes the motor 15, and the second cylinder device D includes no motor. This reduces the consumption of electric power, and makes the device inexpensive. Furthermore, as only the first cylinder device A requires a large control box provided with an inverter, the cost of the entire system of the railroad vibration control device S, including the control box, is lowered. Moreover, the fact that only the first cylinder device A requires a large control box provided with an inverter further facilitates mounting of the railroad vibration control device S on the railroad vehicle.

The railroad vibration control device S can be mounted on the railroad vehicle without difficulty even in the case of the foregoing arrangement where one first cylinder device A and one second cylinder device D are provided per truck W. The railroad vibration control device S achieves a high vibration control effect because the first cylinder device A and the second cylinder device D control vibration of the vehicle body B. Therefore, even when the vehicle body B is vibrated due to the air pressure inside a tunnel while running inside the tunnel, the railroad vibration control device S can effectively control vibration of the vehicle body B.

Thus, the railroad vibration control device S of the present embodiment can effectively control vibration of the railroad vehicle without impairing the ease of mounting on the railroad vehicle.

As the hydraulic pressure circuit LC and the damper circuit DC have the same configuration, it is sufficient to, in vibration control of the vehicle body B, control both the first cylinder device A and the second cylinder device D to exert forces in the extension direction or the contraction direction. That is, the same control command can be issued to the first on-off valves 9, 39 of the hydraulic pressure circuit LC and the damper circuit DC, and the same control command can be issued to the second on-off valves 11,41. Therefore, control signals can be shared. This makes it possible to consolidate controllers that control the first cylinder device A and the second cylinder device D into one controller.

The hydraulic pressure circuit LC and the damper circuit DC include: the first on-off valves 9, 39 provided on the first passages 8, 38 that allow the extension-side chambers 5, 35 to communicate with the contraction-side chambers 6, 36; the second on-off valves 11, 41 provided on the second passages 10, 40 that allow the contraction-side chambers 6, 36 to communicate with the tanks 7, 37; the suction passages 18, 48 that allow only the flow of the liquid from the tanks 7, 37 toward the contraction-side chambers 6, 36; the flow adjustment passages 19, 49 that allow only the flow of the liquid from the contraction-side chambers 6, 36 toward the extension-side chambers 5, 35; the discharge passages 21, 51 that connects the extension-side chambers 5, 35 and the tanks 7, 37; and the variable relief valves 22, 52 provided on the discharge passages 21, 51. Therefore, for example, when the first cylinder device A exerts a thrust force in the extension direction, by bringing the second cylinder device D into operation as a one-way damper that exerts a damping force in the extension direction, the second cylinder device D exerts a damping force in the direction of the thrust force of the first cylinder device A, and does not exert a damping force in the direction opposite to the direction of the thrust force of the first cylinder device A. In this way, the second cylinder device D exerts a damping force contributing to suppression of vibration of the vehicle body B without obstructing vibration control performed by the first cylinder device A. As a result, an even higher vibration control effect can be achieved.

The first cylinder device A is the same as the second cylinder device D, except that it includes the supply passage 16, the pump 12, the motor 15, and the check valve 17. Therefore, the first cylinder device A is manufactured simply by providing the supply passage 16, the pump12, the motor 15, and the check valve 17 to the second cylinder device D. This facilitates the manufacture of the railroad vibration control device S. The manufacture of the railroad vibration control device S is further facilitated by forming the first cylinder body C1 of the first cylinder device A and the second cylinder body C2 of the second cylinder device D from the same components, and by forming the hydraulic pressure circuit LC and the damper circuit DC from the same components.

When the supply passage 16, the pump 12, the motor 15, and the check valve 17 are provided in one circuit block BR as shown in FIG. 2, the first cylinder device A is manufactured simply by mounting this circuit block BR on the second cylinder device D, that is, the manufacture of the first cylinder device A is facilitated drastically.

The cylinder 2 of the first cylinder device A and the cylinder 32 of the second cylinder device D have the same inner diameter, the piston 3 of the first cylinder device A and the piston 33 of the second cylinder device D have the same outer diameter, and the rod 4 of the first cylinder device A and the rod 34 of the second cylinder device D have the same outer diameter. In a circumstance in which the second cylinder device D can exert a damping force, setting the same valve opening pressure for the variable relief valve 22 of the first cylinder device A and the variable relief valve 52 of the second cylinder device D equalizes a thrust force of the first cylinder device A and the damping force of the second cylinder device D, and enables use of the common control signal for the variable relief valves 22, 52. Therefore, it is sufficient for the first cylinder device A and the second cylinder device D to share one control box with a consolidated controller. This further improves the ease of mounting on the vehicle, and makes the railroad vibration control device S inexpensive.

This concludes the description of the embodiment of the present invention. It goes without saying that the scope of the present invention is not limited to the specifics presented in the drawings or the description per se.

Embodiments of this invention were described above, but the above embodiments are merely examples of applications of this invention, and the technical scope of this invention is not limited to the specific constitutions of the above embodiments.

This application claims priority based on Japanese Patent Application No.2014-191693 filed with the Japan Patent Office on September 19, 2014, the entire contents of which are incorporated into this specification.

## Claims

1. A railroad vibration control device, comprising:
a first cylinder device including
a first cylinder body having a cylinder, a piston slidably inserted into the cylinder, and a rod inserted into the cylinder and joined to the piston,
a pump configured to supply hydraulic pressure to the first cylinder body, and
a hydraulic pressure circuit configured to adjust a thrust force generation direction and a thrust force of the first cylinder body; and
a second cylinder device including
a second cylinder body having a cylinder, a piston slidably inserted into the cylinder, and a rod inserted into the cylinder and joined to the piston, and
a damper circuit configured to cause the second cylinder body to function as a damper,
wherein
the hydraulic pressure circuit and the damper circuit are the same circuit.

2. The railroad vibration control device according to claim 1, wherein
the cylinder of the first cylinder body and the cylinder of the second cylinder body have the same inner diameter,
the piston of the first cylinder body and the piston of the second cylinder body have the same outer diameter, and
the rod of the first cylinder body and the rod of the second cylinder body have the same outer diameter.

3. The railroad vibration control device according to claim 1, wherein
the first cylinder device further includes an extension-side chamber and a contraction-side chamber separated from each other by the piston inside the cylinder, and a tank,
the second cylinder device further includes an extension-side chamber and a contraction-side chamber separated from each other by the piston inside the cylinder, and a tank, and
each of the hydraulic pressure circuit and the damper circuit includes:
a first passage configured to allow the extension-side chamber to communicate with the contraction-side chamber;
a first on-off valve provided on the first passage;
a second passage configured to allow the contraction-side chamber to communicate with the tank;
a second on-off valve provided on the second passage;
a suction passage configured to allow only a flow of liquid from the tank toward the contraction-side chamber;
a flow adjustment passage configured to allow only a flow of the liquid from the contraction-side chamber toward the extension-side chamber;
a discharge passage configured to connect the extension-side chamber and the tank; and
a variable relief valve provided on the discharge passage.

4. The railroad vibration control device according to claim 3, wherein
the first cylinder device further includes a circuit block,
the circuit block includes:
the pump;
a supply passage configured to allow the pump to communicate with the extension-side chamber, and configured to allow the pump to communicate with the tank;
a check valve disposed on the supply passage and configured to allow only a flow of liquid from the pump toward the extension-side chamber; and
a motor configured to drive the pump.
